# EUROPÄISCHE PATENTSCHRIFT

(11) **EP 2 428 109 B1**
(45) Veröffentlichungstag und Bekanntmachung des Hinweises auf die Patenterteilung: **12.06.2013**
(21) Anmeldenummer: 11170517.4
(22) Anmeldetag: 20.06.2011
(51) Int. Cl.: A01F 7/06, A01F 12/44

(54) **Abscheideaggregat für einen Mähdrescher**
Separating unit for a combine harvester
Séparateur pour moissonneuse-batteuse

(30) Priorität: 09.09.2010 DE 102010037416
(43) Veröffentlichungstag der Anmeldung: 14.03.2012
(73) Patentinhaber: CLAAS Selbstfahrende Erntemaschinen GmbH, 33428 Harsewinkel (DE)
(72) Erfinder: Molitor, Christoph, 33332 Gütersloh (DE); Reineke, Ernst, 33428 Marienfeld (DE); Peters, Heinz, 48231 Warendorf (DE); Barrelmeyer, Thomas, 33790 Halle/Westf. (DE)

(56) Entgegenhaltungen:
- EP-A1- 0 748 583
- US-A- 4 249 543

## Beschreibung

Die Erfindung betrifft ein Abscheideaggregat für einen Mähdrescher gemäß dem Oberbegriff des Patentanspruches 1.

Ein Abscheideaggregat der eingangs genannten Art ist aus der EP 0 522 267 B1 1 bekannt. Das nach dem Axialflussprinzip arbeitende Abscheideaggregat umfasst einen drehbar gelagerten Abscheiderotor, der in einem Gehäuse angeordnet ist, das mindestens einen mit Öffnungen versehenen Abscheidekorb, der einen Abscheidebereich des Abscheideaggregates bildet, und einen eine geschlossene Mantelfläche aufweisenden Deckel umfasst. Der exzentrisch angeordnete Deckel weist auf seiner dem Abscheiderotor zugewandten Seite eine Vielzahl von koaxial zur Längsachse des Abscheiderotors spiralförmig nebeneinander angeordnete Leitelemente auf, die sich abschnittsweise in radialer Richtung des Deckels erstrecken. Ein dem Abscheideaggregat zugeführter Erntegutstrom hebt auf Grund der Rotationskräfte vom Abscheiderotor ab und bewegt sich dabei, durch den Abscheiderotor und die Leitelemente geführt, in axialer als auch radialer Richtung entlang des Gehäuses. Die in der sich an der Gehäuseinnenseite ausbildenden Dreschmatte enthaltenen Restkörner werden im Bereich des Abscheidekorbes ausgeschieden. Den spiralförmig angeordneten Leitelementen auf der Innenseite des Deckels kommt die Aufgabe zu, das durch den Abscheiderotor in Umfangsrichtung beschleunigte Erntegut zu einer Abgabestelle hin zu leiten. Die von dem Abscheiderotor aufgebrachten Fliehkräfte wirken gleichermaßen auf das aus einem Erntegutstrom abzuscheidende Korn wie auch das in dem Erntegutstrom enthaltene Stroh ein. Dabei kann ein Verdichtungseffekt des Strohs an der Abscheidefläche des Abscheidekorbes auftreten, durch den sich eine Strohmatte ausbildet, die das Ausbeziehungsweise Hindurchtreten des Korns durch die Strohmatte verhindert.

Aus der US 4,249,543 ist eine nach dem Axialflussprinzip arbeitende Dresch- und Abscheidevorrichtung gemäß dem Oberbegriff des Anspruches 1 bekannt. Gegenstand der US 4,249,543 ist das Vereinfachen der Wartungsarbeiten, indem eine Rotorzugangseinheit geschaffen wurde, die durch den Rahmen eines Mähdreschers hindurch in das Rotorgehäuse lösbar einführbar ist.

Die Abscheideleistung variiert in Abhängigkeit von verschiedenen erntegutspezifischen wie auch abscheideaggregatspezifischen Parametern. Eine Erhöhung der Abscheideleistung eines zuvor beschriebenen Abscheideaggregates beruht auf der Vergrößerung der Abscheidefläche, der Erhöhung der Abscheiderotordrehzahl, der Ausgestaltung der Abscheidekörbe sowie der Erhöhung von Gutumläufen im Abscheideaggregat. Dabei sind der Vergrößerung der Abscheideflächen durch den nur begrenzt zur Verfügung stehenden Bauraum Grenzen gesetzt, so dass diese Maßnahme schnell an Grenzen stößt. Eine Erhöhung der Abscheiderotordrehzahl und damit der Fliehkräfte geht mit einer Erhöhung der Leistungsaufnahme des Abscheideaggregates einher und führt zu einer zunehmenden Zerstörung des Strohs.

Der Erfindung liegt die Aufgabe zu Grunde, ein Abscheideaggregat der eingangs genannten Art bereitzustellen, welches sich unter Beibehaltung einer bestehenden Abscheidefläche durch eine erhöhte Abscheideleistung auszeichnet.

Diese Aufgabe wird durch die im Patentanspruch 1 genannten kennzeichnenden Merkmale gelöst.

Weitere vorteilhafte Ausführungen des Erfindungsgegenstandes ergeben sich aus den nachgeordneten Unteransprüchen.

Indem der Erntegutstrom von dem rampenförmigen Gutstromablenkelement von der Oberfläche des Deckels abgehoben und bei seinem anschließenden Wiederauftreffen auf eine den Abscheiderotor umgebende Oberfläche entmischt und aufgelockert wird, wird der weiter oben beschriebene nachteilige Verdichtungseffekt reduziert. Durch den durch das Gutstromablenkelement hervorgerufenen Effekt des Entmischens und Auflockerns des Erntegutstromes lässt sich die erforderliche Abscheiderotordrehzahl reduzieren, was zu einer geringeren Leistungsaufnahme führt sowie mit einer Verbesserung der Strohqualität einhergeht. Ein weiterer Vorteil dieser Anordnung besteht darin, dass der Abscheiderotor zumindest im Bereich des Gutstromablenkelementes nicht aktiv fördert, da sich auf Grund einer exzentrischen Anordnung des Deckels der Erntegutstrom außerhalb des Wirkdurchmessers des Abscheiderotors befindet. Das erfindungsgemäße Abscheideaggregat kann Bestandteil eines Abscheideaggregates mit einem Dresch-Trennrotors sein, der einen sich in axialer Richtung des Mähdreschers Dreschbereich und sich daran anschließenden Abscheidebereich aufweist, wie auch einer Kombination von aus einer tangential zur Gutflussrichtung durch den Mähdrescher angeordneten Drescheinrichtung, an die sich das nach dem Axialflussprinzip arbeitende Abscheideaggregat anschließt.

Hierzu ist das mindestens eine Gutstromablenkelement den Leitelementen in Umfangsrichtung des Gehäuses gesehen nachgeordnet. Somit steht dem von dem mindestens einen Gutstromablenkelement in radialer Richtung abgelenkten Erntegutstrom eine hindernisfreie Wegstrecke zur Verfügung, bevor es wieder auf die den Abscheiderotor umgebende Oberfläche des Gehäuses auftrifft.

Insbesondere kann sich das mindestens eine Gutstromablenkelemente zumindest abschnittsweise über die axiale Ausdehnung der Mantelfläche des Deckels erstrecken.

Vorteilhafterweise kann die axiale Ausdehnung der Anordnung des mindestens einen Gutstromablenkelementes der axialen Ausdehnung zumindest eines Abscheidekorbes entsprechen. Auf diese Weise wird der Erntegutstrom zumindest innerhalb des von dem mindestens einen Abscheidekorb gebildeten Abscheidebereiches nach jedem Umlauf beim Austreten zwischen den spiralförmig angeordneten Leitelementen abgelenkt. Vorzugsweise erstreckt sich die Anordnung des mindestens einen Gutstromablenkelementes über die gesamte Ausdehnung des Abscheidebereiches, wobei ein durchgehendes oder mehrere nebeneinander angeordnete Gutstromablenkelemente vorgesehen sein können.

Bevorzugt kann der Neigungswinkel des mindestens einen rampenförmigen Gutstromablenkelementes derart gewählt sein, dass ein von dem Gutstromablenkelement abgelenkter Gutstrom auf die Oberfläche des Deckels auftrifft. Durch das gezielte Ablenken des Gutstromes auf die Oberfläche des Deckels kann vermieden werden, dass das abgelenkte Erntegut auf die Oberfläche des mindestens einen Abscheidekorbes auftrifft, um sich zu entmischen, was einen höheren Kurzstrohanteil zur Folge haben würde. Der Einsatz des Gutstromablenkelementes verhält sich in Bezug auf die Belastung der Reinigungseinrichtung im Wesentlichen neutral.

Gemäß einer bevorzugten Weiterbildung kann der Neigungswinkel des mindestens einen rampenförmigen Gutstromablenkelementes derart gewählt sein, dass ein von dem Gutstromablenkelement abgelenkter Gutstrom auf die Oberfläche des Abscheiderotors trifft. Hierdurch wird der Gutstrom in Richtung der Werkzeuge des Abscheiderotors abgelenkt. Das Kämmen der Werkzeuge des Abscheiderotors mit dem Erntegutstrom bewirkt eine aktive Durchmischung desselben, da die Strömungsgeschwindigkeit des Erntegutstromes geringer als die Umfangsgeschwindigkeit der Werkzeuge des Abscheiderotors ist.

Vorzugsweise kann das mindestens eine Gutstromablenkelement eine geschlossene Oberfläche aufweisen.

Alternativ kann das mindestens eine Gutstromablenkelement eine abschnittsweise unterbrochene Oberfläche aufweisen. Der Vorteil dieser Alternative besteht darin, dass das in der Erntegutmatte enthaltene Stroh dem Verlauf des rampenförmigen Gutstromablenkelementes folgt, während das in der Erntegutmatte enthaltene Korn durch die abschnittsweise unterbrochene Oberfläche hindurch fallen kann, um anschließend über den Abscheidekorb abgeschieden zu werden.

Hierzu kann das mindestens eine Gutstromablenkelement mindestens ein Sockelelement zur Befestigung an der Innenseite des Deckels aufweisen, an welchem eine Vielzahl von parallel und beabstandet zueinander angeordneten Stangen angebracht ist. Vorzugsweise ist eine gleichmäßige Beabstandung der Stangen zueinander vorgesehen, es ist aber auch in axialer Richtung des Abscheidebereiches gesehen eine ungleichmäßige Beabstandung der Stangen zueinander denkbar.

Insbesondere können die Stangen in axialer und/oder radialer Richtung des Rotors unter einem Winkel zur Oberfläche des Deckels geneigt angeordnet sein. Hierdurch lässt sich die Bewegungsbahn des abgelenkten Erntegutstromes gezielt beeinflussen.

Vorzugsweise können die Gutstromablenkelemente lösbar an dem Deckel befestigbar sein. Dies ermöglicht den einfachen Austausch der Gutstromablenkelemente bei auftretendem Verschleiß wie auch den Einsatz unterschiedlicher Gutstromablenkelemente, um eine Anpassung an sich verändernde Erntebedingungen durchführen zu können.

Die Erfindung wird nachstehend anhand von in den Zeichnungen dargestellten Ausführungsbeispielen näher erläutert.

In den zugehörigen Zeichnungen zeigen:
- Fig. 1: eine Frontalsicht eines Abscheideaggregates mit einer ersten Ausführungsform eines Gutstromablenkelementes;
- Fig. 2.: eine perspektivische Ansicht des Abscheideaggregates mit einer zweiten Ausführungsform eines Gutstromablenkelementes gemäß Fig. 1;
- Fig. 3.: eine perspektivische Ansicht des Abscheideaggregates gemäß Fig. 1 mit einer dritten Ausführungsform eines Gutstromablenkelementes.

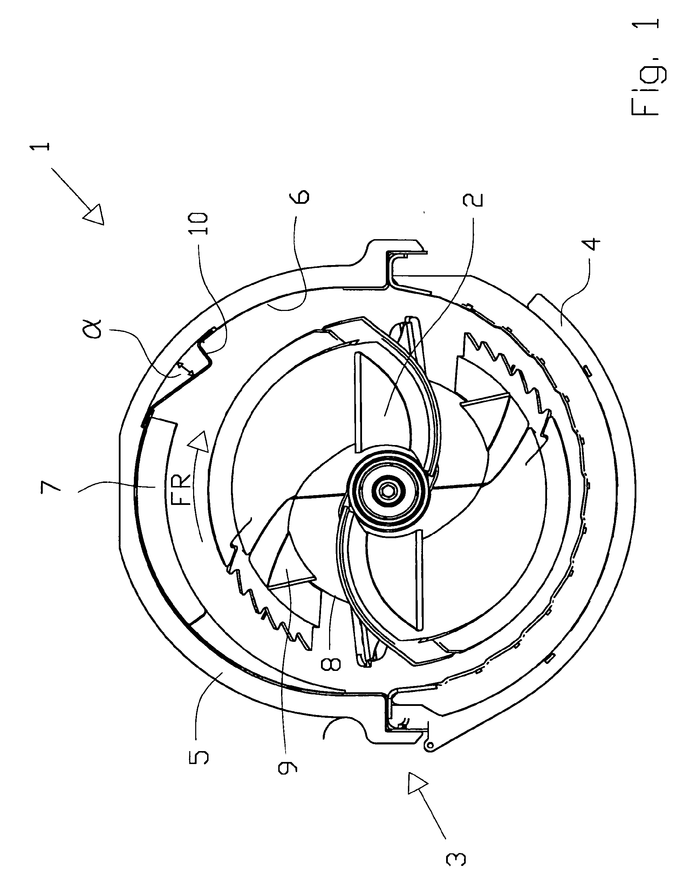

In Fig. 1 ist eine Frontalsicht eines nach dem Axialflussprinzip arbeitenden Abscheideaggregates 1 eines Mähdreschers dargestellt. Das Abscheideaggregat 1 weist einen drehbar gelagerten Abscheiderotor 2 auf, der von einem parallel zu dem Abscheiderotor 2 angeordneten Gehäuse 3 umgeben ist. Das Gehäuse 3 umfasst mindestens einen siebartigen Abscheidekorb 4, der den Abscheidebereich des Abscheideaggregates 1 bildet, sowie einen Deckel 5, die den Abscheidrotor 2 in Umfangsrichtung gesehen jeweils etwa hälftig umgeben. Vorzugsweise sind mehrere Abscheidekörbe 4 parallel zu der Längsachse des Abscheiderotors 2 in axialer Richtung hintereinander liegend angeordnet. Der Abscheiderotor 2 ist auf seiner Umfangsfläche 8 mit beliebig gestalteten, die Umfangsfläche 8 spiralförmig umspannenden Mitnahmeelementen 9 versehen, die das Erntegut in axialer Richtung des Abscheideaggregates 1 fördern. Eine mögliche radiale Förderrichtung des Erntegutes ist beispielhaft durch einen mit FR bezeichneten Pfeil angedeutet, welche auch der Drehrichtung des Abscheiderotors 2 entspricht.

Der mindestens eine siebartige Abscheidekorb 4 weist eine Vielzahl von Durchtrittsöffnungen auf, durch die Korn aus einem dem Abscheideaggregat 1 zugeführten Erntegutstrom abgeschieden wird. Der Deckel 5 weist auf seiner dem Abscheiderotor 2 zugewandten Innenseite, die nachfolgend als Mantelfläche 6 bezeichnet wird, eine Vielzahl von koaxial zur Längsachse des Abscheiderotors 2 nebeneinander angeordneten Leitelementen 7 auf, die sich abschnittsweise in radialer Richtung des Deckels 5 erstrecken. Die Leitelemente 7 sind spiralförmig an der Mantelfläche 6 angeordnet. An der Mantelfläche 6 des Deckels 5 ist mindestens ein sich achsparallel zu der Längsachse des Abscheiderotors 2 erstreckendes, rampenförmiges Gutstromablenkelement 10 angeordnet. Das Gutstromablenkelement 10 ist den Leitelementen 7 in Gutflussrichtung beziehungsweise in Drehrichtung des Abscheiderotors 2 gesehen nachgeordnet auf der Mantelfläche 6 angeordnet. Dabei erstreckt sich das mindestens eine Gutstromablenkelement 10 zumindest nahezu vollständig über die gesamte axiale Ausdehnung der Mantelfläche 6. Das rampenförmige Gutstromablenkelement 10 weist einen Steigungswinkel α auf, dessen Größe für das Umlenkverhalten des auf das Gutstromablenkelement 10 auftreffenden Erntegutes maßgeblich ist.

Das nach dem Dreschen dem Abscheiderotor 2 zugeführte Erntegut, das sich im Wesentlichen aus Korn und Nichtkornbestandteilen wie Stroh zusammensetzt, wird auf Grund der rotationsbedingten Fliehkräfte an die Mantelfläche 6 gedrückt, wobei sich eine verdichtete Erntegutmatte ausbildet. Durch die Verdichtung der Erntegutmatte wird der Durchgang des darin enthaltenen Korns zumindest reduziert, so dass eine Vergrößerung der von den Abscheidekörben 4 gebildeten Abscheideflächen keine signifikante Zunahme der Abscheidung zur Folge hat. Auch eine Erhöhung der Drehzahl des Abscheiderotors ist insoweit nicht zielführend, da dies mit einer erhöhten Energieaufnahme sowie einem größeren Anteil an zerstörtem Stroh einhergeht. Durch das rampenförmige Gutstromablenkelement 10 an der Mantelfläche 6 wird nach jedem Umlauf des Erntegutes zwischen den jeweiligen Leitelementen 7 die Erntegutmatte entmischt und aufgelockert, indem diese von dem rampenförmigen Gutstromablenkelement 10 von der Mantelfläche 6 abgehoben und anschließend auf diese zurückfällt.

Der Steigungswinkel α des rampenförmigen Gutstromablenkelementes 10 ist derart gewählt ist, dass die von dem Gutstromablenkelement 10 abgelenkte Erntegutmatte nach einer kurzen Flugphase wieder auf die Mantelfläche 6 trifft. Durch den Aufprall auf die Mantelfläche 6 wird die Erntegutmatte entmischt und aufgelockert, wodurch sich die darin enthaltenen Körner bei einem erneuten Umlauf im Abscheiderotor 2 auf Grund der Fliehkräfte wieder leichter nach außen durch die Erntegutmatte hindurch bewegen können, um abgeschieden zu werden.

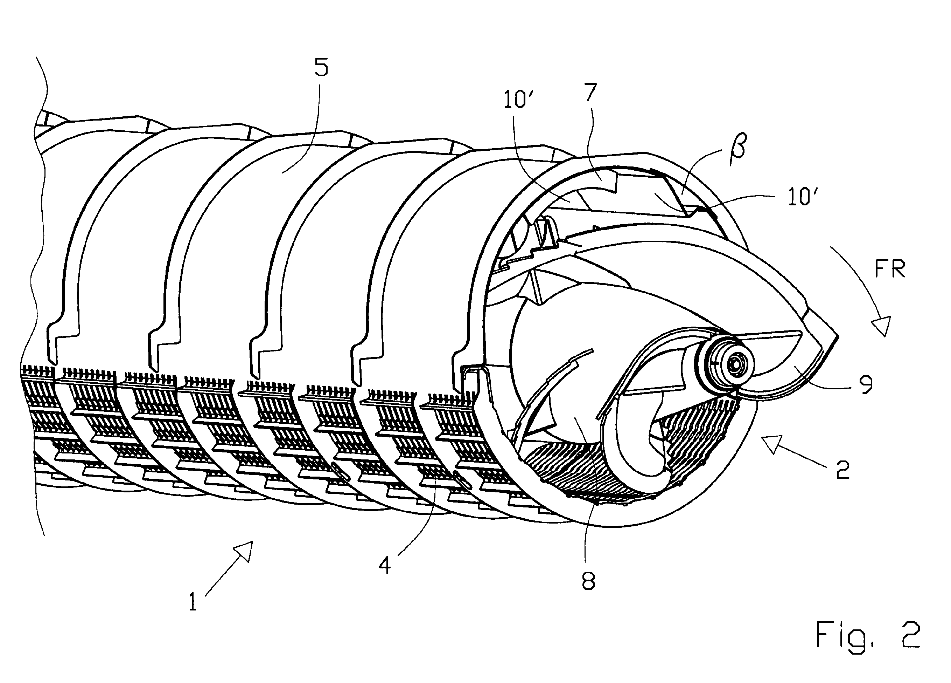

In Fig. 2 ist eine zweite Ausführungsform eines rampenförmigen Gutstromablenkelementes 10' gemäß Fig. 1 dargestellt. Wie der Darstellung zu entnehmen ist, weist das Abscheideaggregat 1 mehrere, parallel zur Längsachse des Abscheiderotors 2 hintereinander angeordnete Abscheidekörbe 4 auf. Das Gutstromablenkelement 10' unterscheidet sich von dem Gutstromablenkelement 10 gemäß der Fig. 1 dadurch, dass der Steigungswinkel β des rampenförmigen Gutstromablenkelementes 10' größer gewählt ist als der Steigungswinkel α des Gutstromablenkelementes 10 gemäß Fig. 1. Die Erntegutmatte erfährt auf Grund des größeren Steigungswinkels β eine stärkere Ablenkung, so dass die Erntegutmatte in Richtung des Abscheiderotors 2 abgelenkt wird. Dabei gerät die Erntegutmatte in den Wirkungsbereich der Werkzeuge des Abscheiderotors 2, die diese durchkämmen. Durch das Durchkämmen der Erntegutmatte wird diese aktiv durchmischt, wodurch eine Auflockerung des die Erntegutmatte bildenden Gemisches aus Stroh und Kornbestandteilen erreicht wird. Einen weiteren Aspekt bei der Beeinflussung der Erntegutmatte stellt die Ausdehnung des Gutstromablenkelementes 10, 10' in Umfangsrichtung des Abscheiderotors 2 dar. Mit zunehmender Ausdehnung in radialer Richtung wird die Verweildauer auf dem rampenförmigen Gutstromablenkelementes 10, 10' variiert, um den Auftreffpunkt auf die Mantelfläche 6 des Deckels 5 beziehungsweise den Eintritt in den Wirkungsbereich des Abscheiderotors 2 festlegen zu können.

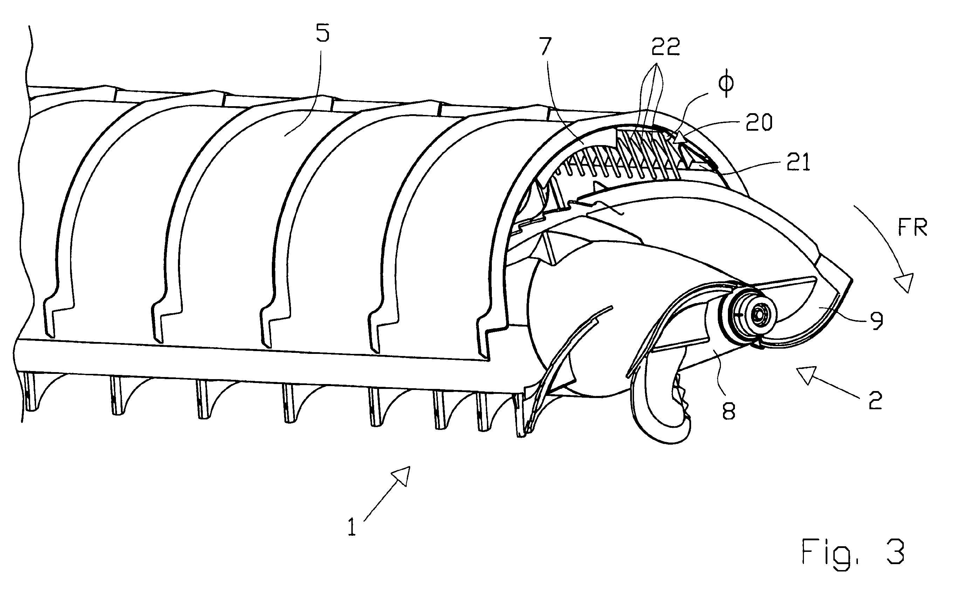

Die Darstellung in Fig. 3 zeigt eine perspektivische Ansicht des Abscheideaggregates 1 gemäß Fig. 1 mit einer dritten Ausführungsform eines Gutstromablenkelementes 20. Bei dieser Ausführungsform ist das Gutstromablenkelement 20 rechen- oder kammförmig ausgebildet. Hierzu weist das Gutstromablenkelement 20 ein Sockelelement 21 zu der Befestigung an der Mantelfläche 6 des Deckels 5 auf. An dem Sockelelement 21 ist eine Vielzahl von parallel zueinander angeordneten Stangen 22 angebracht. Die Stangen 22 sind in radialer Richtung des Abscheiderotors 2 unter einem Steigungswinkel Φ zu der Mantelfläche 6 des Deckels 5 geneigt angeordnet, um eine Rampe zu bilden. Zudem können die Stangen 22 in axialer Richtung des Abscheiderotors 2 unter einem Winkel geneigt angeordnet sein, der näherungsweise dem Neigungswinkel der spiralförmig angeordneten Leitelemente 7 entspricht. Das rechen- oder kammförmige Gutstromablenkelement 20 durchkämmt die Erntegutmatte und lenkt diese entsprechend des Steigungswinkels Φ, den die Stangen 22 und die Mantelfläche 6 einschließen, in der weiter oben beschriebenen Weise ab. Durch die kamm- oder rechenartige Ausgestaltung wird das in der Erntegutmatte enthaltene Stroh durch das Gutstromablenkelement 20 abgelenkt und aufgelockert, während dass das darin enthaltene Korn zumindest teilweise aus der Erntegutmatte abgeschieden werden kann und zwischen den Stangen hindurch auf die Mantelfläche 6 beziehungsweise auf die Oberfläche des Abscheidekorbes 4 fällt. Das Sockelelement 21 kann entfallen, wenn die Stangen 22 unmittelbar an der Mantelfläche 6 befestigt würden.

### Bezugszeichenliste:

| | |
|---|---|
| 1 | Abscheideaggregat |
| 2 | Abscheiderotor |
| 3 | Gehäuse |
| 4 | Abscheidekorb |
| 5 | Deckel |
| 6 | Mantelfläche |
| 7 | Leitelement |
| 8 | Umfangsfläche |
| 9 | Mitnahmeelemente |
| 10 | Gutstromablenkelement |
| 10' | Gutstromablenkelement |
| | |
| 20 | Gutstromablenkelement |
| 21 | Sockelelement |
| 22 | Stange |
| | |
| FR | Förderrichtung |
| | |
| α | Steigungswinkel |
| β | Steigungswinkel |
| Φ | Steigungswinkel |

## Patentansprüche

1. Abscheideaggregat (1) für einen Mähdrescher, welches nach dem Axialflussprinzip arbeitet, umfassend einen drehbar gelagerten Abscheiderotor (2), der in einem Gehäuse (3) angeordnet ist, das mindestens einen mit Öffnungen versehenen Abscheidekorb (4) und einen eine geschlossene Mantelfläche (6) aufweisenden Deckel (5) umfasst, wobei die Mantelfläche (6) auf ihrer dem Abscheiderotor (2) zugewandten Seite eine Vielzahl von koaxial zur Längsachse des Abscheiderotors (2) nebeneinander angeordneten Leitelementen (7) aufweist, die sich abschnittsweise in radialer Richtung des Deckels (5) erstrecken,
**dadurch gekennzeichnet,**
**dass** mindestens ein sich achsparallel zu der Längsachse des Abscheiderotors (2) erstreckendes, rampenförmiges Gutstromablenkelement (10, 10', 20) an der dem Abscheiderotor (2) zugewandten Seite der Mantelfläche (6) angeordnet ist, wobei das mindestens eine Gutstromablenkelement (10, 10', 20) den Leitelementen (7) in Umfangsrichtung des Gehäuses (3) gesehen, d.h. in Gutflussrichtung nachgeordnet ist.

2. Abscheideaggregat (1) nach Anspruch 1, **dadurch gekennzeichnet, dass** sich das mindestens eine Gutstromablenkelemente (10, 10', 20) zumindest abschnittsweise über die axiale Ausdehnung der Mantelfläche (6) erstreckt.

3. Abscheideaggregat (1) nach einem der Ansprüche 1 oder 2, **dadurch gekennzeichnet, dass** die axiale Ausdehnung der Anordnung des mindestens einen Gutstromablenkelementes (10, 10', 20) der axialen Ausdehnung zumindest eines Abscheidekorbes (4) entspricht.

4. Abscheideaggregat (1) nach einem der Ansprüche 1 bis 3 **dadurch gekennzeichnet, dass** der Steigungswinkel (α, β, Φ) des mindestens einen rampenförmigen Gutstromablenkelementes (10, 10', 20) derart gewählt ist, dass ein von dem Gutstromablenkelement (10, 10', 20) abgelenkter Gutstrom auf den Deckel (5) auftrifft.

5. Abscheideaggregat (1) nach einem der Ansprüche 1 bis 3, **dadurch gekennzeichnet, dass** der Steigungswinkel (α, β, Φ) des mindestens einen rampenförmigen Gutstromablenkelementes (10, 10', 20) derart gewählt ist, dass ein von dem Gutstromablenkelement (10, 10', 20) abgelenkter Gutstrom in den Wirkungsbereich des Abscheiderotors (2) gelangt.

6. Abscheideaggregat (1) nach einem der Ansprüche 1 bis 5, **dadurch gekennzeichnet, dass** durch die radiale Ausdehnung des Gutstromablenkelementes (10, 10', 20) in Umfangsrichtung des Gehäuses (3) variierbar ist.

7. Abscheideaggregat (1) nach einem der Ansprüche 1 bis 6, **dadurch gekennzeichnet, dass** das mindestens eine Gutstromablenkelement (10, 10') eine geschlossene Oberfläche aufweist.

8. Abscheideaggregat (1) nach einem der Ansprüche 1 bis 6, **dadurch gekennzeichnet, dass** das mindestens eine Gutstromablenkelement (20) eine abschnittsweise unterbrochene Oberfläche aufweist.

9. Abscheideaggregat (1) nach Anspruch 8, **dadurch gekennzeichnet, dass** das mindestens eine Gutstromablenkelement (20) mindestens ein Sockelelement (21) zur Befestigung an der Mantelfläche (6) des Deckels (5) aufweist, an welchem eine Vielzahl von parallel zueinander angeordneten Stangen (22) angebracht sind.

10. Abscheideaggregat (1) nach Anspruch 9, **dadurch gekennzeichnet, dass** die Stangen (22) in axialer und/oder radialer Richtung des Abscheiderotors (2) unter einem Winkel zu der Mantelfläche (6) des Deckels (5) geneigt angeordnet sind.

11. Abscheideaggregat (1) nach einem der Ansprüche 1 bis 10, **dadurch gekennzeichnet, dass** die Gutstromablenkelemente (10, 10' ,20) lösbar an dem Deckel (5) befestigbar sind.

## Claims

1. A separating device (1) for a combine harvester, which operates in accordance with the axial flow principle, including a rotatably mounted separating rotor (2) arranged in a housing (3) which includes at least one separating concave (4) provided with openings and a cover (5) having a closed peripheral surface (6), wherein the peripheral surface (6) on its side towards the separating rotor (2) has a plurality of guide elements (7) which are arranged in mutually juxtaposed relationship coaxially with the longitudinal axis of the separating rotor (2) and which extend portion-wise in the radial direction of the cover (5),
**characterised in that**
at least one ramp-shaped crop flow deflecting element (10, 10', 20) extending in axis-parallel relationship with the longitudinal axis of the separating rotor (2) is arranged at the side of the peripheral surface (6), that is towards the separating rotor (2), wherein the at least one crop flow deflecting element (10, 10', 20) is arranged downstream of the guide elements (7) as viewed in the peripheral direction of the housing (3), that is to say in the material flow direction.

2. A separating device (1) according to claim 1 **characterised in that** the at least one crop flow deflecting element (10, 10', 20) extends at least portion-wise over the axial extent of the peripheral surface (6).

3. A separating device (1) according to one of claims 1 and 2 **characterised in that** the axial extent of the arrangement of the at least one crop flow deflecting element (10, 10', 20) corresponds to the axial extent of at least one separating concave (4).

4. A separating device (1) according to one of claims 1 to 3 **characterised in that** the gradient angle (α, β, φ) of the at least one ramp-shaped crop flow deflecting element (10, 10', 20) is so selected that a crop flow deflected by the crop flow deflecting element (10, 10', 20) is incident on the cover (5).

5. A separating device (1) according to one of claims 1 to 3 **characterised in that** the gradient angle (α, β, φ) of the at least one ramp-shaped crop flow deflecting element (10, 10', 20) is so selected that a crop flow deflected by the crop flow deflecting element (10, 10', 20) passes into the operative region of the separating rotor (2).

6. A separating device (1) according to one of claims 1 to 5 **characterised in that** the radial extent of the crop flow deflecting element (10, 10', 20) is variable in the peripheral direction of the housing (3).

7. A separating device (1) according to one of claims 1 to 6 **characterised in that** the at least one crop flow deflecting element (10, 10') has a closed surface.

8. A separating device (1) according to one of claims 1 to 6 **characterised in that** the at least one crop flow deflecting element (20) has a surface which is portion-wise interrupted.

9. A separating device (1) according to claim 8 **characterised in that** the at least one crop flow deflecting element (20) has at least one base element (21) for fixing to the peripheral surface (6) of the cover (3), to which a plurality of bars (22) arranged parallel to each other are mounted.

10. A separating device (1) according to claim 9 **characterised in that** the bars (22) are arranged inclinedly at an angle relative to the peripheral surface (6) of the cover (5) in the axial and/or radial direction of the separating rotor (2).

11. A separating device (1) according to one of claims 1 to 10 **characterised in that** the crop flow deflecting elements (10, 10', 20) can be fixed releasably to the cover (5).

## Revendications

1. Organe séparateur (1) pour une moissonneuse-batteuse, lequel fonctionne selon le principe du flux axial et comprend un rotor de séparation (2) qui est monté à rotation et disposé dans un carter (3), lequel comprend au moins une corbeille de séparation (4) pourvue d'ouvertures et un couvercle (5) possédant une surface d'enveloppe fermée (6), la surface d'enveloppe (6) comportant de son côté tourné vers le rotor de séparation (2) une pluralité d'éléments de guidage (7) qui sont disposés côte à côte coaxialement à l'axe longitudinal du rotor de séparation (2) et qui s'étendent par portions dans la direction radiale du couvercle (5), **caractérisé en ce qu'**au moins un élément de déviation de flux de produit (10, 20) en forme de rampe, qui s'étend parallèlement à l'axe longitudinal du rotor de séparation (2), est disposé du côté de la surface d'enveloppe (6) tourné vers le rotor de séparation (2), ledit au moins un élément de déviation de flux de produit (10, 20) étant placé après les éléments de guidage (7) par rapport à la direction circonférentielle du carter (3), c'est-à-dire à la direction du flux de produit.

2. Organe séparateur (1) selon la revendication 1, **caractérisé en ce que** ledit au moins un élément de déviation de flux de produit (10, 20) s'étend au moins par portions selon l'extension axiale de la surface d'enveloppe (6).

3. Organe séparateur (1) selon une des revendications 1 ou 2, **caractérisé en ce que** l'extension axiale de la disposition dudit au moins un élément de déviation de flux de produit (10, 10', 20) correspond à l'extension axiale d'au moins une corbeille de séparation (4).

4. Organe séparateur (1) selon une des revendications 1 à 3, **caractérisé en ce que** l'angle d'inclinaison (α, β, Φ) dudit au moins un élément de déviation de flux de produit (10, 10', 20) en forme de rampe est choisi de façon qu'un flux de produit dévié par l'élément de déviation de flux de produit (10, 10', 20) atteigne le couvercle (5).

5. Organe séparateur (1) selon une des revendications 1 à 3, **caractérisé en ce que** l'angle d'inclinaison (α, β, Φ) dudit au moins un élément de déviation de flux de produit (10, 10', 20) en forme de rampe est choisi de façon qu'un flux de produit dévié par l'élément de déviation de flux de produit (10, 10', 20) parvienne dans la zone d'action du rotor de séparation (2).

6. Organe séparateur (1) selon une des revendications 1 à 5, **caractérisé en ce que** l'extension radiale de l'élément de déviation de flux de produit (10, 10', 20) dans la direction circonférentielle du carter (3) est variable.

7. Organe séparateur (1) selon une des revendications 1 à 6, **caractérisé en ce que** ledit au moins un élément de déviation de flux de produit (10, 10') présente une surface fermée.

8. Organe séparateur (1) selon une des revendications 1 à 6, **caractérisé en ce que** ledit au moins un élément de déviation de flux de produit (20) présente une surface interrompue par portions.

9. Organe séparateur (1) selon la revendication 8, **caractérisé en ce que** ledit au moins un élément de déviation de flux de produit (20) présente, pour sa fixation à la surface d'enveloppe (6) du couvercle (5), au moins un élément de socle (21), sur lequel est montée une pluralité de barres (22) disposées parallèlement les unes aux autres.

10. Organe séparateur (1) selon la revendication 9, **caractérisé en ce que**, par rapport à la surface d'enveloppe (6) du couvercle (5), les barres (22) sont inclinées d'un certain angle dans la direction axiale et/ou radiale du rotor de séparation (2).

11. Organe séparateur (1) selon une des revendications 1 à 10, **caractérisé en ce que** les éléments de déviation de flux de produit (10, 20) peuvent être fixés au couvercle (5) de manière détachable.
